# DEMANDE DE BREVET EUROPEEN

(11) **EP 4 755 719 A1**
(43) Date de publication de la demande: **10.06.2026**
(21) Numéro de dépôt: 25221505.8
(22) Date de dépôt: 08.12.2025
(51) Int. Cl.: B60R 11/00, B60R 11/02, H05K 5/00

(54) **ENSEMBLE POUR VÉHICULE COMPRENANT UN ISOLANT PROTECTEUR D'UN CALCULATEUR**

(30) Priorité: 09.12.2024 FR 2413676
(71) Demandeur: FLEXIS, 92100 Boulogne-Billancourt (FR)
(72) Inventeur: OUATIK, Ali, 78280 Guyancourt (FR)
(74) Mandataire: Lavoix

(57) **Abrégé**

Ensemble (1) pour véhicule, notamment pour cockpit pour véhicule automobile, comprenant un isolant (2) pour véhicule automobile et un calculateur (3) dudit véhicule automobile.

L'isolant (2) comprend une protection (4) protubérante destinée à protéger le calculateur (3), ladite protection (4) comprenant un couvercle (7) étant susceptible d'adopter une position fermée et une position ouverte, la position ouverte permettant de libérer l'accès au calculateur (3) en cas de maintenance.

## Description

### Domaine technique

La présente invention concerne le domaine des calculateurs et en particulier la protection des calculateurs pour véhicules.

Les calculateurs dans les véhicules sont généralement entourés de composants qui peuvent générer de l'humidité et parfois engendrer des fuites de fluide et notamment d'eau. Cependant, les calculateurs sont des pièces électroniques qui risquent une dégradation importante de leurs fonctions s'ils sont en contact avec un fluide et doivent donc en être protégés.

C'est pourquoi aujourd'hui les calculateurs comprennent des capots qui assurent une protection étanche contre d'éventuelles fuites de liquide. De manière générale, dans le montage d'un véhicule, le capot du calculateur est installé après le calculateur et les composants environnants. Le capot est ainsi monté sur le calculateur par l'intermédiaire de vis.

Cependant, dans certains cas, l'espace situé entre les composants environnants et le calculateur est insuffisant pour qu'un capot soit monté et vissé sur le calculateur. Cela engendre des problèmes de fixation du capot et d'accessibilité au montage et au démontage du capot sur le calculateur.

Par exemple, dans le cas d'un calculateur d'un coussin gonflable de sécurité pour véhicule automobile situé à l'avant du véhicule, plus précisément dans le cockpit du véhicule, le calculateur est monté avant le système de climatisation du véhicule. Le système de climatisation est positionné juste au-dessus du calculateur et comprend une sortie d'évacuation de fluide qui circule autour du calculateur du coussin gonflable. La zone entre le système de climatisation et le calculateur est restreinte en termes d'espace, rendant impossible le montage et le démontage d'un capot dudit calculateur.

Il est connu de US 2022/185205 A1 de prévoir un boitier de protection du calculateur et un logement pour le boitier dans le plancher du véhicule. Une telle protection du calculateur nécessite la conception d'un boitier et un aménagement du plancher du véhicule ce qui augmente le nombre de pièce et le coût de fabrication du véhicule.

### Exposé de l'invention

La présente invention a pour but de proposer une solution qui réponde aux problématiques précitées.

L'invention a donc pour objet un ensemble pour véhicule, notamment pour cockpit pour véhicule, comprenant un isolant pour véhicule et un calculateur dudit véhicule. L'isolant permet d'isoler acoustiquement et/ou thermiquement un plancher du véhicule automobile du reste du véhicule et comprend une protection protubérante destinée à protéger le calculateur, ladite protection comprenant un couvercle étant susceptible d'adopter une position fermée et une position ouverte, la position ouverte permettant de libérer l'accès au calculateur en cas de maintenance.

Selon un premier mode de réalisation, le couvercle est mobile. Le couvercle mobile comprend une extrémité rattachée à la protection et un corps capable de bouger pour adopter une position fermée ou une position ouverte.

Avantageusement, le couvercle est mobile en rotation autour d'un axe de rotation.

Optionnellement, le couvercle est mobile en rotation autour de plusieurs axes de rotation.

Avantageusement, le couvercle comprend une réduction de l'épaisseur au niveau de l'axe de rotation.

Selon un deuxième mode de réalisation, le couvercle est amovible. Le couvercle amovible est entièrement détachable de la protection.

Avantageusement, le couvercle est amovible et est retiré de la protection lorsque ledit couvercle est en position ouverte par l'intermédiaire de prédécoupes usinées sur l'isolant.

Selon un mode de réalisation, le couvercle est amovible et est maintenu en place en partie sur la protection grâce à sa forme lorsque ledit couvercle est en position fermée.

Avantageusement, l'isolant comprend des matériaux imperméables et insonorisants.

L'invention a aussi pour objet un véhicule automobile comprenant un ensemble tel que défini ci-dessus.

### Brève description des dessins

D'autres buts, caractéristiques et avantages de l'invention apparaîtront à la lecture de la description suivante, donnée uniquement à titre d'exemple non limitatif et faite en référence aux dessins annexés sur lesquels :
- La [Fig. 1] est une représentation schématique d'un ensemble pour cockpit pour véhicule automobile, l'ensemble comprenant un isolant, un calculateur d'un coussin gonflable de sécurité et un couvercle de protection du calculateur ;
- La [Fig. 2] est une représentation latérale d'un couvercle mobile de protection d'un calculateur, comprenant un axe de rotation transversal ;
- La [Fig. 3] est une représentation de face d'un couvercle mobile de protection d'un calculateur, comprenant un axe de rotation longitudinal ;
- La [Fig. 4A] est une représentation de face d'un couvercle mobile de protection d'un calculateur en position fermée, comprenant deux axes de rotation longitudinaux ;
- La [Fig. 4B] est une représentation de face d'un couvercle mobile de protection d'un calculateur en position ouverte, comprenant deux axes de rotation longitudinaux ; et
- La [Fig. 5] est une vue en perspective d'un couvercle amovible de protection d'un calculateur.

### Description détaillée

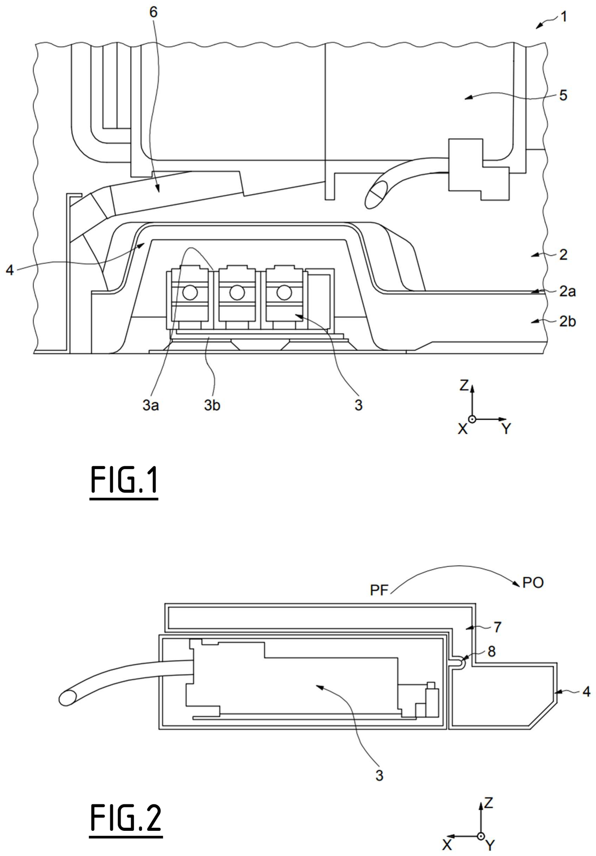

Sur la figure 1, on a représenté un ensemble pour cockpit pour véhicule automobile, l'ensemble étant désigné par la référence numérique 1. L'ensemble 1 comprend un isolant 2 pour cockpit de véhicule automobile et un calculateur 3 dudit véhicule automobile. Le véhicule automobile s'inscrit dans un repère orthogonal X, Y, Z. L'axe X désigne la direction longitudinale avant-arrière du véhicule, l'axe Y désigne la direction transversale orientée vers la gauche du véhicule observé de face, selon la direction X, et l'axe Z désigne la direction verticale, orientée vers le haut du véhicule.

Selon le mode de réalisation illustré sur les figures, l'isolant 2 de l'ensemble 1 est une pièce qui permet d'isoler acoustiquement et/ou thermiquement le plancher du véhicule automobile du reste du véhicule. Il comprend deux couches de matériaux, la première couche 2a étant une mousse insonorisante qui absorbe les vibrations des mécanismes du véhicule automobile et la deuxième couche 2b étant une plaque imperméable. L'isolant 2 forme une coque étanche et insonorisante entre le plancher du véhicule automobile et les composants du cockpit du véhicule automobile. Il comprend une protection protubérante 4 destinée à protéger le calculateur 3.

Dans le mode de réalisation illustré sur les figures, le calculateur 3 est le calculateur d'un coussin gonflable de sécurité du véhicule automobile situé sous le système de climatisation 5 du véhicule. Le système de climatisation 5 comprend une sortie d'évacuation 6 de fluide qui circule autour du calculateur du coussin gonflable 3. Il y a donc un risque que le fluide de la sortie d'évacuation 6 du système de climatisation 5 soit projeté sur le calculateur 3. En outre, l'espace étant restreint entre le système de climatisation 5 et le calculateur 3, ledit calculateur 3 ne comprend pas de capot de protection. C'est pourquoi l'isolant 2 comprend une protection 4 du calculateur 3, la protection 4 étant intégrée dans l'isolant 2 directement. Le calculateur 3 est un composant électronique parallélépipèdique, comprenant une surface supérieure 3a faisant face à une surface intérieure de la protection 4 et une surface inférieure 3b positionnée sur le plancher du véhicule automobile.

Lors du montage d'un véhicule automobile, l'isolant 2 est monté en premier, puis le calculateur 3 est installé sur le plancher du véhicule automobile et enfin le système de climatisation 5 avec l'ensemble des composants du cockpit. La protection 4 est apte à faciliter le montage et l'accès au calculateur 3 en cas de maintenance. En particulier, la protection 4 comprend un couvercle 7 qui est susceptible d'adopter une position fermée PF et une position ouverte PO, la position ouverte PO permettant de libérer l'accès au calculateur 3.

La protection protubérante 4 est donc une extension de l'isolant 2 du véhicule permettant la protection du calculateur 3 et le couvercle 7 est une pièce de la protection pouvant être mobile ou amovible afin d'adopter la position fermée PF et la position ouverte PO selon le besoin. La protection 4 comprend les mêmes matériaux que l'isolant 2, en particulier, une couche de mousse insonorisante et une couche étant une plaque imperméable. La protection protubérante 4 forme une coque de protection du calculateur 3 suivant la forme du calculateur 3. La protection 4 est conçue pour protéger également l'avant du calculateur 3 tout en laissant passer les câbles du calculateur 3.

Selon le mode de réalisation illustré sur les figures 2 à 4B, le couvercle 7 est un couvercle mobile. Le couvercle mobile 7 est caractérisé en ce qu'il comprend une extrémité rattachée à la protection 4 et un corps capable de bouger pour adopter la position fermée PF ou la position ouverte PO. Le couvercle 7 comprend les mêmes matériaux que ceux de l'isolant qui sont des matériaux suffisamment souples pour être pliés relativement facilement. En principe, le couvercle 7 est manipulé par un opérateur qui est capable d'ouvrir et de fermer le couvercle 7 à la main.

Dans le mode de réalisation illustré sur la figure 2, le couvercle mobile 7 comprend un axe de rotation s'étendant selon l'axe transversal Y. L'axe de rotation se situe à l'arrière du calculateur 3, à la même hauteur que sa surface supérieure 3a. Le couvercle 7 est donc ouvert et fermé longitudinalement autour de l'axe transversal Y, d'avant en arrière du calculateur 3.

Le couvercle 7 comprend une réduction de l'épaisseur 8 locale au niveau de l'axe de rotation afin de faciliter la mobilité du couvercle 7. Ainsi, au niveau de l'axe de rotation transversal, l'épaisseur de la protection 4 est diminuée. En particulier, l'épaisseur de la mousse insonorisante est réduite, facilitant le pliage du couvercle 7 au niveau de son extrémité rattachée à la protection 4.

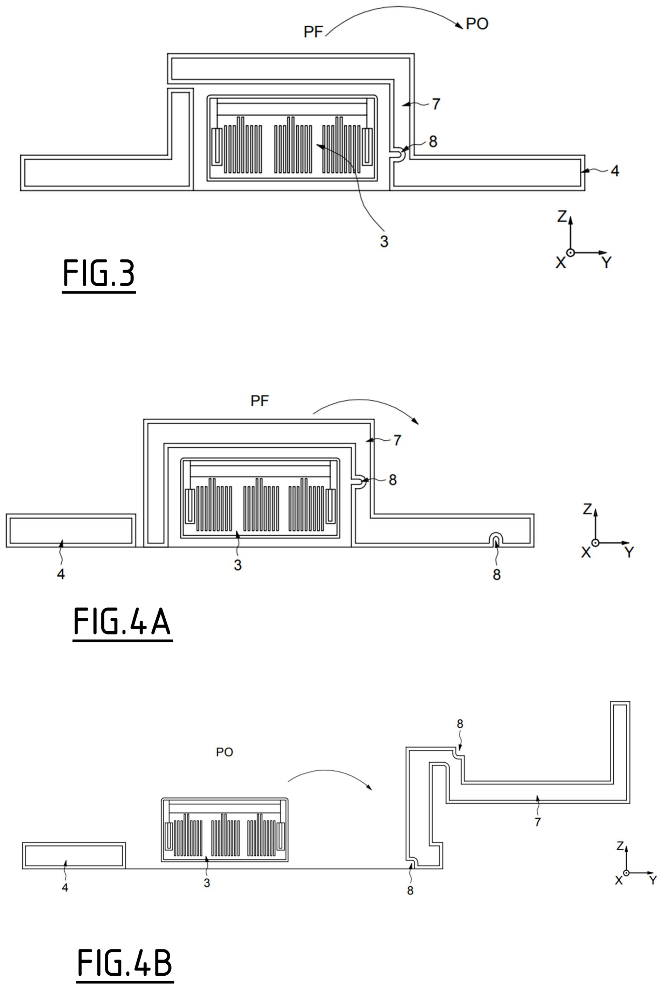

Dans le mode de réalisation illustré sur la figure 3, le couvercle mobile 7 comprend un axe de rotation s'étendant selon l'axe longitudinal X. L'axe de rotation se situe sur le côté du calculateur 3, presque à la même hauteur que sa surface inférieure 3b. Le couvercle 7 est donc ouvert et fermé latéralement autour de l'axe longitudinal X au-dessus du calculateur 3.

Le couvercle 7 comprend une réduction de l'épaisseur 8 locale au niveau de l'axe de rotation afin de faciliter la mobilité du couvercle 7. Ainsi, au niveau de l'axe de rotation longitudinal, l'épaisseur de la protection 4 est diminuée. En particulier, l'épaisseur de la mousse insonorisante est réduite, facilitant le pliage du couvercle 7 au niveau de son extrémité rattachée à la protection 4.

Dans le mode de réalisation illustré sur les figures 4A et 4B, le couvercle mobile 7 comprend deux axes de rotation s'étendant selon l'axe longitudinal X. Un premier axe de rotation se situe sur le côté du calculateur 3, presque à la même hauteur que sa surface supérieure 3a et un deuxième axe de rotation est éloigné du calculateur 3 et se situe à la même hauteur que la surface inférieure 3b du calculateur 3. Le couvercle 7 est donc ouvert et fermé latéralement autour de deux axes longitudinaux X au-dessus du calculateur 3.

Le couvercle 7 comprend deux réductions d'épaisseur 8 localisées au niveau des axes de rotation afin de faciliter la mobilité du couvercle 7. Ainsi, au niveau des axes de rotation longitudinaux, l'épaisseur de la protection est diminuée. En particulier, l'épaisseur de la mousse insonorisante est réduite, facilitant le pliage du couvercle 7 au niveau de son premier axe de rotation et au niveau de son extrémité rattachée à la protection 4.

Lorsque l'isolant 2 est fourni pour le montage du véhicule. Il comprend une prédécoupe 9 effectuée au niveau du couvercle 7 et la/les réductions d'épaisseur 8 locale nécessaires. Lors du montage du véhicule, l'isolant 2 est ainsi positionné contre le plancher du véhicule automobile le couvercle 7 de la protection 4 étant en position fermée PF, le couvercle 7 est ensuite ouvert par pliage autour d'un ou de plusieurs axes de rotation afin d'accéder à l'espace destiné à accueillir le calculateur 3, le calculateur 3 est installé sur le plancher du véhicule automobile avec le reste du cockpit, puis le couvercle 7 de la protection 4 est refermé sur le calculateur 3.

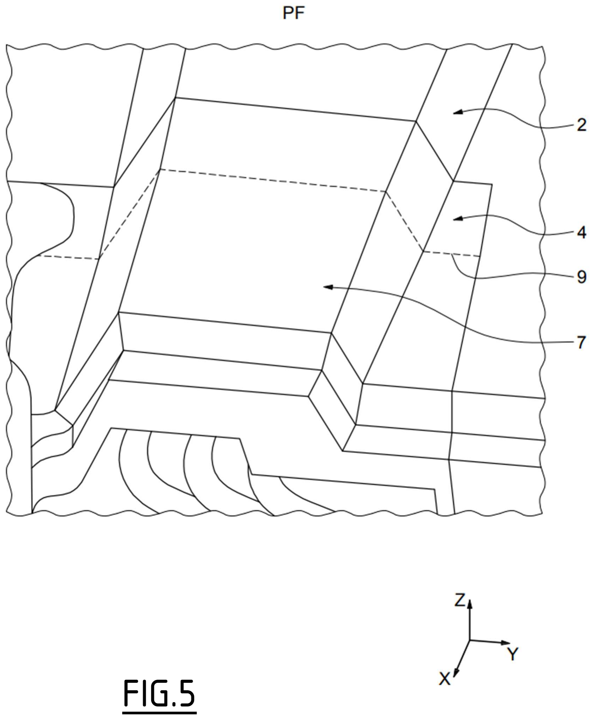

Selon le mode de réalisation illustré sur la figure 5, le couvercle 7 est un couvercle amovible. Le couvercle amovible 7 est entièrement détachable de la protection 4. Lorsque le couvercle 7 est en position fermé PF, il est emboîté sur la protection 4 et lorsque le couvercle 7 est en position ouverte PO, il est retiré de la protection 4 et n'est plus en contact avec ladite protection 4.

La prédécoupe 9 usinée sur l'isolant 2 permet le détachement total du couvercle 7 dans le cas où celui-ci est amovible. En effet, le couvercle 7 est totalement découpé et détaché de la protection 4 avant que l'isolant 2 soit installé sur le plancher du véhicule automobile afin d'accueillir le calculateur 3. Une fois que l'isolant 2, le calculateur 3 et les composants du cockpit sont installés, le couvercle 7 est fermé et donc positionné sur la protection 4. Le couvercle 7 est maintenu en place naturellement lorsqu'il est en position fermée PF. En effet, la forme du couvercle 7 s'emboîte parfaitement sur la protection 4 et maintient le couvercle 7 en place transversalement selon l'axe Y et longitudinalement selon l'axe X. Le couvercle 7 est maintenu verticalement selon l'axe Z grâce aux composants environnants.

Bien entendu, on ne sort pas du cadre de l'invention lorsque l'élément 1 présente une composition différente. La protection protubérante 4 de l'isolant 2 est apte à protéger n'importe quel calculateur 3 dans n'importe quelle architecture de véhicule.

La protection protubérante 4 de l'isolant 2 permet d'économiser une pièce puisque le calculateur 3 ne nécessite pas de capot supplémentaire. La solution apporte ainsi une protection étanche au calculateur 3 tout en insonorisant le plancher du véhicule et permet une solution de protection du calculateur 3 lorsque l'environnement est restreint. La fabrication, le montage, le démontage de l'ensemble 1 et les opérations de maintenance effectuées sur le calculateur 3 sont en outre simplifiées.

## Revendications

1. Ensemble (1) pour véhicule, notamment pour cockpit pour véhicule automobile, comprenant un isolant (2) pour véhicule automobile et un calculateur (3) dudit véhicule automobile, **caractérisé en ce que** l'isolant (2) permet d'isoler acoustiquement et/ou thermiquement un plancher du véhicule automobile du reste du véhicule et comprend une protection (4) protubérante destinée à protéger le calculateur (3), ladite protection (4) comprenant un couvercle (7) étant susceptible d'adopter une position fermée (PF) et une position ouverte (PO), la position ouverte (PO) permettant de libérer l'accès au calculateur (3) en cas de maintenance.

2. Ensemble (1) selon la revendication 1, dans lequel le couvercle (7) est mobile.

3. Ensemble (1) selon l'une des revendications 1 et 2, dans lequel le couvercle (7) est mobile en rotation autour d'un axe de rotation.

4. Ensemble (1) selon l'une quelconque des revendications 1 à 3, dans lequel le couvercle (7) est mobile en rotation autour de plusieurs axes de rotation.

5. Ensemble (1) selon l'une des revendications 3 et 4, dans lequel le couvercle (7) comprend une réduction de l'épaisseur (8) au niveau de l'axe de rotation.

6. Ensemble (1) selon la revendication 1, dans lequel le couvercle (7) est amovible.

7. Ensemble (1) selon l'une des revendications 1 et 6, dans lequel le couvercle (7) est amovible et est retiré de la protection (4) lorsque ledit couvercle (7) est en position ouverte (PO) par l'intermédiaire de prédécoupes (9) usinées sur l'isolant (2).

8. Ensemble (1) selon l'une quelconque des revendications 1, 6 et 7, dans lequel le couvercle (7) est amovible et est maintenu en place en partie sur la protection (4) grâce à sa forme lorsque ledit couvercle est en position fermée (PF).

9. Ensemble (1) selon l'une quelconque des revendications 1 à 8, dans lequel l'isolant (2) comprend des matériaux imperméables et insonorisants.

10. Véhicule automobile comprenant un ensemble (1) selon l'une quelconque des revendications 1 à 9.
